Europäisches Patentamt

European Patent Office

Office européen des brevets

(19)

(11)  **EP 1 361 715 B1**

(12)  **EUROPÄISCHE PATENTSCHRIFT**

(45) Veröffentlichungstag und Bekanntmachung des Hinweises auf die Patenterteilung:
**14.04.2004   Patentblatt 2004/16**

(51) Int Cl.⁷: **H04L 25/02**, H04B 7/005

(21) Anmeldenummer: **02009360.5**

(22) Anmeldetag: **03.05.2002**

(54) **Verfahren zum Bestimmen der Signalausbreitungseigenschaften eines drahtlos übertragbaren Signals**

Method for determining the signal propagation properties of a wireless transmittable signal

Procédé pour déterminer les propretés de propagation d' un signal transmissible sans fil

(84) Benannte Vertragsstaaten:
**AT CH DE DK FR GB LI SE**

(43) Veröffentlichungstag der Anmeldung:
**12.11.2003   Patentblatt 2003/46**

(73) Patentinhaber: **Elektrobit AG**
**8608 Bubikon (CH)**

(72) Erfinder:
 • **Stucki, Andreas**
   **CH-8624 Grüt-Gossau (CH)**
 • **Jourdan, Patrik**
   **CH-8645 Jona (CH)**
 • **Fleury, Bernard, Prof. Dr.**
   **DK-9000 Aalborg (DK)**

(74) Vertreter: **Patentanwälte**
**Leinweber & Zimmermann**
**Rosental 7,**
**II Aufgang**
**80331 München (DE)**

(56) Entgegenhaltungen:
**WO-A-00/76160**

 • **FLEURY B H ET AL: "CHANNEL PARAMETER ESTIMATION IN MOBILE RADIO ENVIRONMENTS USING THE SAGE ALGORITHM" IEEE JOURNAL ON SELECTED AREAS IN COMMUNICATIONS, IEEE INC. NEW YORK, US, Bd. 17, Nr. 3, März 1999 (1999-03), Seiten 434-449, XP000804973 ISSN: 0733-8716**
 • **KOCIAN A ET AL: "ITERATIVE JOINT SYMBOL DETECTION AND CHANNEL ESTIMATION FOR DS/CDMA VIA THE SAGE ALGORITHM" IEEE INTERNATIONAL SYMPOSIUM ON PERSONAL, INDOOR AND MOBILE RADIO COMMUNICATIONS, XX, XX, Bd. 2, 18. September 2000 (2000-09-18), Seiten 1410-1414, XP002902206**
 • **FLEURY B H ET AL: "Wideband angle of arrival estimation using the SAGE algorithm" 1996 IEEE 4TH INTERNATIONAL SYMPOSIUM ON SPREAD SPECTRUM TECHNIQUES, Bd. 1, 22. - 25. September 1996, Seiten 79-85, XP002217773 Mainz, DE**
 • **FLEURY B H ET AL: "High-resolution channel parameter estimation for MIMO applications using the SAGE algorithm" 2002 INTERNATIONAL ZURICH SEMINAR ON BROADBAND COMMUNICATIONS ACCESS - TRANSMISSION - NETWORKING, 19. - 21. Februar 2002, Seiten 30-39, XP002217774**

**Beschreibung**

Die Erfindung betrifft ein Verfahren zum Bestimmen der Signalausbreitungseigenschaften eines drahtlos übertragenen Signals, insbesondere Mobilfunksignals, bei dem ein in mindestens einem Abstrahlbereich abgestrahltes Signal in mindestens einem Empfangsbereich empfangen wird und Werte von Parametern eines vorgegebenen Signalmodells zur Anpassung eines auf Grundlage des Signalmodells geschätzten Signals an das empfangene Signal in einer Folge von Iterationsschritten optimiert werden, und ein digitales Speichermedium, mit dessen Hilfe das Verfahren ausgeführt werden kann.

Verfahren der vorstehend beschriebenen Art wurden zur Auswertung von Ergebnissen einer PET(Positron-Elektron-Tomographie)-Untersuchung entwickelt. Später wurden diese Verfahren zur Entwicklung von Verfahren zur drahtlosen Kommunikation, einschließlich Mobilfunksystemen und Multi-User-Detection-Empfängern genutzt.

Bei den zuletzt beschriebenen Anwendungen wird üblicherweise davon ausgegangen, daß sich das in einem Empfangsbereich empfangene Signal $y(t)$ aus einer Vielzahl von Teilsignalen $y_\ell(t)$ zusammensetzt, von denen jedes einen von dem abgestrahlten Signal hervorgerufenen Signalanteil $s(t; \theta_\ell)$ und einen Rauschanteil $W_\ell(t)$ aufweist. Dieser Zusammenhang läßt sich formelmäßig wie folgt ausdrücken:

$$y(t) = \sum_{\ell=1}^{\infty} s(t;\theta_\ell) + W_\ell(t) = \sum_{\ell=1}^{\infty} y_\ell(t)$$

Dabei kann angenommen werden, daß der von dem abgestrahlten Signal $u(t)$ hervorgerufene Signalanteil $s(t; \theta_\ell)$ wie folgt beschrieben werden kann:

$$s(t;\theta_\ell) = \alpha_\ell \exp\{2\pi i \nu_\ell \cdot t\} \cdot c_2(\Omega_{2,\ell}) c_1(\Omega_{1,\ell})^T \cdot u(t-\tau_\ell)$$

Dabei bezeichnet $\alpha_\ell$ die komplexe Amplitude des Teilsignals $\ell$, $\nu_\ell$ die durch Reflexion an einem ggf. beweglichen Reflektor, die Abgabe des Signals durch einen beweglichen Sender und/oder den Empfang des Signals durch einen beweglichen Empfänger hervorgerufene Dopplerverschiebung des Teilsignals $\ell$ bezüglich des abgestrahlten Signals, $\Omega_{2,\ell}$ den Einfallswinkel des Teilsignals $\ell$ in den Empfangsbereich, $\Omega_{1,\ell}$ die Abstrahlrichtung des Teilsignals $\ell$ vom Abstrahlbereich, $c_2$ die Empfangscharakteristik des Empfangsbereichs, $c_1$ die Abstrahlcharakteristik des Abstrahlbereichs, $\tau_\ell$ die Signallaufzeit des Teilsignals $\ell$ vom Abstrahlbereich zum Empfangsbereich und $\theta_\ell$ den Parametervektor $[\Omega_{1,\ell}, \Omega_{2,\ell}, \tau_\ell, \nu_\ell, \alpha_\ell]$ des Teilsignals $\ell$. Dabei können die Teilsignale $y_\ell(t)$ von einem Abstrahlbereich abgestrahlte und über verschiedene Signalausbreitungswege zum Empfangsbereich gelangte Signale sein und/oder von unterschiedlichen Abstrahlbereichen zum Empfangsbereich abgestrahlte Signale sein. Die Anzahl der bei der Signalauswertung berücksichtigten Teilsignale wird mit L bezeichnet. Unter der Annahme, daß der von dem abgestrahlten Signal hervorgerufene Signalanteil des empfangenen Signals insgesamt mit

$$s(t,\theta) = \sum_{\ell=1}^{L} s(t;\theta_\ell)$$

bezeichnet wird, wobei gilt,

$$\theta \doteq [\theta_1 \ ... \ \theta_L]$$

kann der Parametervektor $\hat{\theta}_{ML}(y)$ mit dem eine optimale Anpassung des auf Grundlage des Signalmodells geschätzten Signals an das empfangene Signal $y(t)$ gelingt, als derjenige Wert von $\theta$ angenommen werden, für den die Funktion $\Lambda(\theta;y)$ maximal wird:

$$\hat{\theta}_{ML}(y) \in \underset{\theta}{\arg max}\{\Lambda(\theta; y)\}$$

wobei gilt:

$$\Lambda(\theta, y) \hat{=} \frac{1}{N_0}[2\int_{D_0} \mathrm{Re}\{s^H(t'; \theta)y(t')\}dt - \int_{D_0} \| s(t'; \theta) \|^2 dt']$$

Dieser Zusammenhang ist beispielsweise erläutert in "B.H. Fleury, D. Dahlhaus, R. Heddergott und M. Tschudin, "Wideband Angle of Arrival Estimation Using the SAGE Algorithm" in Proc. IEEE Fourth International Symp. Spread Spectrum Technics and Applications (ISSSTA'96), Mainz, Germany, September 1996, S. 79-85". Aus der vorstehenden Veröffentlichung geht hervor, daß es sich bei der Anpassung der Parameterwerte des üblicherweise benutzten Signalmodells um ein nichtlineares 8L-dimensionales Optimierungsproblem handelt, weil sowohl die komplexe Amplitude $\alpha_\ell$ als auch der Einfallswinkel $\Omega_{2\ell}$ und der Abstrahlwinkel $\Omega_{1\ell}$ durch jeweils zwei Parameterwerte beschrieben werden. Wenn man annimmt, daß das empfangene Signal aus nur 20 Teilsignalen besteht, handelt es sich also um ein 160-dimensionales nichtlineares Optimierungsproblem, das rechnerisch nicht bewältigt werden kann.

Aus diesem Grund wurde unter der Annahme, daß die Teilsignale $y_\ell(t)$ voneinander unabhängig sind, der vorstehend bereits angesprochene "Expectation-Maximization-Algorithmus" zur Lösung der Optimierungsaufgabe angegeben, bei dem die Parametersätze $\theta_\ell$ für die einzelnen Teilsignale unabhängig voneinander optimiert werden, so daß das 8L-dimensionale Optimierungsproblem in L jeweils achtdimensionale Probleme zerfällt. Zur weiteren Reduzierung des Rechnungsaufwandes wurde der vorstehend ebenfalls bereits angesprochene SAGE-Algorithmus vorgeschlagen, indem die einzelnen achtdimensionalen Optimierungsprobleme für jedes Teilsignal in acht eindimensionale Probleme aufgelöst werden.

Für sog. MIMO-Anwendungen, bei denen der Abstrahlbereich eine Mehrzahl von Abstrahlelementen (Antennen) aufweist und der Empfangsbereich eine Mehrzahl von Empfangselementen (Empfangsantennen) aufweist, wird dieser Algorithmus erläutert in "B.H. Fleury, P. Jourdan und A. Stucki, "High-Resolution Channel Parameter Estimation for MIMO Applications Using the SAGE Algorithm" in 2002 Int. Zürich Seminar on Broadband Communications (IZS2002), 2002".

Ferner sind iterative Verfahren zum Bestimmen der Signalausbreitungseigenschaften eines drahtlos übertragenen Signals angegeben in WO 00/76160 A1.

Beim Einsatz der bekannten Verfahren und Vorrichtungen zum Bestimmen der Signalausbreitungseigenschaften hat es sich jedoch gezeigt, daß die damit erhaltenen Parametersätze für die einzelnen Teilsignale in vielen Fällen keine zufriedenstellende Beschreibung der Ausbreitungsverhältnisse erlauben, insbesondere nicht in Zusammenhang mit den physikalischen Gegebenheiten in der untersuchten Umgebung gebracht werden können.

Angesichts dieser Probleme im Stand der Technik liegt der Erfindung die Aufgabe zugrunde, eine Weiterbildung der bekannten Verfahren anzugeben, welche eine realistische Beschreibung der Signalausbreitungseigenschaften mit vorgegebenen Signalmodellen erlaubt sowie eine Vorrichtung zur Ausführung derartiger Verfahren anzugeben und ein entsprechendes digitales Speichermedium bereitzustellen.

Gemäß einem ersten Gesichtspunkt der Erfindung wird diese Aufgabe durch eine Weiterbildung der bekannten Verfahren gelöst, die im wesentlichen dadurch gekennzeichnet ist, daß das Ergebnis der iterativen Optimierung nach jedem Iterationsschritt bewertet und in Abhängigkeit von dem Ergebnis der Bewertung festgelegt wird, ob

a) die iterative Optimierung abgebrochen oder

b1) für den nächsten Iterationsschritt mindestens ein neuer Parameter des Signalmodells berücksichtigt und/oder

b2) mindestens ein Parameter des Signalmodells beim nächsten Iterationsschritt ignoriert wird oder

b3) der nächste Iterationsschritt ohne Änderung der berücksichtigten Parameter durchgeführt wird.

Diese Erfindung geht auf die verblüffend einfache Erkenntnis zurück, daß die im Stand der Technik beobachteten Probleme in erster Linie dadurch hervorgerufen werden, daß bei herkömmlichen Verfahren im Hinblick auf die zur Verfügung stehende Computerkapazität sowohl die Anzahl der Iterationsschritte als auch die Anzahl der berücksichtigten Teilsignale vor Beginn der iterativen Optimierung festgelegt wird. Das kann zu einem Abbruch der iterativen Optimierung vor Erreichen einer zur zufriedenstellenden Systembeschreibung hinreichenden Konvergenz führen. Bei dem erfindungsgemäßen Verfahren wird die Anzahl der Iterationsschritte hingegen nicht vorab festgelegt, sondern nach jedem Iterationsschritt in Abhängigkeit vom Ergebnis der iterativen Optimierung eine Bewertung durchgeführt, ob eine hinreichende Systembeschreibung erreicht wurde. Sofern diese Voraussetzung nicht erfüllt ist, wird die iterative Optimierung fortgesetzt. Dabei kann im Rahmen der Bewertung des Ergebnisses der iterativen Optimierung das geschätzte Signal mit dem empfangenen Signal verglichen werden und als Abbruchkriterium ein Grenzwert für die integrale Abweichung des geschätzten Signals von dem empfangenen Signal festgelegt werden. Alternativ oder zusätzlich kann als Abbruchkriterium auch ein Grenzwert für die maximale Abweichung festgelegt werden. Bei Unterschreiten der entsprechenden Grenzwerte wird die iterative Optimierung dann abgebrochen.

Alternativ oder zusätzlich kann im Rahmen der Bewertung des Ergebnisses der iterativen Optimierung untersucht werden, ob einzelne Parametersätze vorgegebenen Konvergenzkriterien genügen, d.h. ob die Parameterwerte der einzelnen Parametersätze in dem bewerteten Iterationsschritt einen vorgegebenen Grenzwert für eine Abweichung von dem entsprechenden in einem vorhergehenden Iterationsschritt ermittelten Parameterwert unterschreiten.

Der bei dem erfindungsgemäßen Verfahren ausgeführte Bewertungsschritt erfordert zusätzliche Auswertungskapazität. Ferner kann die variable Gestaltung der Anzahl von Iterationsschritten ohne weitere Änderung der bekannten Verfahren dazu führen, daß eine unverhältnismäßig lange Auswertungszeit benötigt wird. Im Extremfall werden ohne weitere Änderungen der bekannten Verfahren die vorgegebenen Konvergenzkriterien nicht erreicht, so daß das Verfahren der iterativen Optimierung nicht abgeschlossen wird.

Aus diesem Grund können bei dem erfindungsgemäßen Verfahren in Abhängigkeit von der Bewertung des Ergebnisses der iterativen Optimierung nach jedem Iterationsschritt Anpassungen bei der Auswahl der bei der Iteration berücksichtigten Parameter des der iterativen Optimierung zugrundegelegten Signalmodells vorgenommen werden. Derartige Anpassungen können einerseits in der Berücksichtigung neuer Teilsignale bestehen. Das kann dann notwendig werden, wenn die zunächst vorgegebene Anzahl von Teilsignalen zur realistischen Beschreibung der Signalausbreitungsumgebung nicht ausreicht. Alternativ oder zusätzlich können bei der Ausführung des erfindungsgemäßen Verfahrens im Verlauf der iterativen Optimierung auch einzelne Parameter ignoriert werden, d.h. bei einem oder mehreren aufeinanderfolgenden Iterationsschritten keiner weiteren Optimierung zugeführt werden. Dabei können entsprechende Teilsignale entweder vollständig aus dem der iterativen Optimierung zugrundeliegenden Signalmodell entfernt oder aber in diesem Signalmodell als konstant angenommen werden. Die vollständige Entfernung des entsprechenden Teilsignals aus dem Signalmodell kann im Rahmen des erfindungsgemäßen Verfahrens dann erfolgen, wenn die im Rahmen der iterativen Optimierung geschätzte Amplitude des entsprechenden Teilsignals einen vorgegebenen Grenzwert unterschreitet, ggf. über eine vorgegebene Anzahl von aufeinanderfolgenden Iterationsschritten. Eine vorübergehende Ignorierung einzelner Parameter bzw. Parametersätze kann im Rahmen des erfindungsgemäßen Verfahrens erfolgen, wenn die entsprechenden Parameter bei einer vorgegebenen Anzahl aufeinanderfolgender Iterationsschritte keine einen vorgegebenen Grenzwert überschreitende Änderung erfahren haben. Dabei kann dieser Grenzwert wie auch die übrigen vorstehend angesprochenen Grenzwerte variabel gestaltet werden, so daß in einem Iterationsschritt ignorierte Parameter in einem späteren Iterationsschritt wieder berücksichtigt werden.

Bei der Ausführung erfindungsgemäßer Verfahren werden die Parameterwerte üblicherweise in jedem Iterationsschritt zur Anpassung des geschätzten Signals an das zu messende Signal schrittweise variiert. Dabei kann eine weitere Beschleunigung des Verfahrens erreicht werden, wenn mindestens ein Parameterwert in mindestens einem Iterationsschritt nur in einem vorgegebenen Teilbereich eines möglichen Wertebereiches für diesen Parameter variiert wird. Eine solche Maßnahme kann beispielsweise dann sinnvoll sein, wenn die physikalische Umgebung für die Signalausbreitung den Ausbreitungsweg für ein oder mehrere Teilsignale als besonders wahrscheinlich erscheinen läßt und für diese Teilsignale einzelne Parameterwerte in Abhängigkeit von der Umgebung besonders zuverlässig vorhergesagt werden können.

In diesem Zusammenhang können die Teilbereiche entsprechender Parameterwerte anderer Teilsignale dadurch festgelegt werden, daß der Teilbereich des besonders zuverlässig vorhersehbaren Teilsignals von dem möglichen Wertebereich ausgenommen wird. Auf diese Weise können auch Teilsignale außerhalb der wahrscheinlichsten Signalausbreitungswege zuverlässig ermittelt werden.

Eine weitere Beschleunigung bei der Ausführung erfindungsgemäßer Verfahren kann erreicht werden, wenn für mindestens einen Parameterwert des Signalmodells die Schrittweite bei der Variation innerhalb mindestens eines Iterationsschrittes und/oder zwischen aufeinanderfolgenden Iterationsschritten variiert wird.

Wie vorstehend bereits erläutert, wird bei der Ausführung erfindungsgemäßer Verfahren zweckmäßigerweise davon ausgegangen, daß das gemessene Signal nach dem vorgegebenen Signalmodell aus einer Mehrzahl von jeweils durch einen entsprechenden Parametersatz definierten Teilsignalen gebildet ist und die Optimierung der Anpassung der einzelnen Parameterwerte in einer Folge von Teiliterationsschritten ausgeführt werden kann, in denen jeweils eine Optimierung der Werte für einen Parametersatz unter Annahme konstanter Werte für die Parameter der übrigen Parametersätze erfolgt. Dabei können die Ergebnisse der Teiliterationsschritte innerhalb eines eine Folge von Teiliterationsschritten aufweisenden vollständigen Iterationsschrittes bereits berücksichtigt werden, wenn in einem Teiliterationsschritt ermittelte Parameterwerte eines Parametersatzes bei einem folgenden Teiliterationsschritt desselben Iterationsschrittes als konstante Werte für diesen Parametersatz angenommen werden. Dadurch kann eine deutliche Beschleunigung des Verfahrens erreicht werden. Zusätzlich können die Parameterwerte von in dem entsprechenden Iterationsschritt noch nicht behandelten Parametersätzen in mindestens einem Teiliterationsschritt zumindest teilweise aus dem vorhergehenden Iterationsschritt übernommen werden.

Im Rahmen der erfindungsgemäß vorgeschlagenen variablen Gestaltung der iterativen Optimierung hat es sich im Sinne eines besonders raschen Erreichens der vorgegebenen Konvergenzkriterien als besonders vorteilhaft erwiesen, wenn die Reihenfolge der Ausführung der einzelnen Teiliterationsschritte eines vollständigen Iterationsschrittes in Abhängigkeit von den in einem vorhergehenden Iterationsschritt optimierten Parameterwerten der Parametersätze bestimmt wird. Wenn in diesem Zusammenhang die Reihenfolge der Teiliterationsschritte entsprechend der in einem vorhergehenden Iterationsschritt optimierten Amplituden der Teilsignale beginnend mit dem die höchste/kleinste Amplitude aufweisenden Teilsignal ausgeführt wird, können auch die Parametersätze für schwache Teilsignale schnell und zuverlässig optimiert werden.

Wie vorstehend bereits erläutert, kann die Berücksichtigung eines neuen Parameters bzw. eines neuen Parametersatzes im Rahmen des erfindungsgemäßen Verfahrens angezeigt sein, wenn nach Ausführung einer Anzahl von Iterationsschritten noch besonders große Abweichungen zwischen dem geschätzten Signal und dem gemessenen Signal beobachtet werden.

Daneben kann die Berücksichtigung neuer Parametersätze bzw. Teilsignale auch dann erforderlich werden, wenn sich hinter einem der bei der Ausführung des erfindungsgemäßen Verfahrens bereits berücksichtigten Teilsignale eine Mehrzahl hinsichtlich zumindest eines Parameters ähnlicher Teilsignale verbergen. Das kann i.allg. daran erkannt werden, daß sich ein Parameterwert eines Parametersatzes zwischen zwei aufeinanderfolgenden Iterationsschritten besonders stark verändert. Daher zeichnet sich eine besonders vorteilhafte Ausführungsform der Erfindung dadurch aus, daß bei dem Schritt der Bewertung in dem entsprechenden Iterationsschritt optimierte Werte der Parameter mindestens eines Parametersatzes mit den in einem vorhergehenden Iterationsschritt optimierten Werten für die Parameter desselben Parametersatzes verglichen werden und bei einer oberhalb eines vorgegebenen Grenzwertes liegenden Änderung mindestens eines Parameterwertes in einem folgenden Iterationsschritt ein neuer Parametersatz des Signalmodells berücksichtigt wird.

Das erfindungsgemäße Verfahren kann mit besonderem Vorteil unter Verwendung des SAGE-Algorithmus zur Parameteroptimierung eingesetzt werden, bei dem in mindestens einem Teiliterationsschritt die Optimierung der Anpassung der Parameterwerte eines Parametersatzes in einer Folge von Unteriterationsschritten ausgeführt wird, in denen jeweils eine Optimierung der Anpassung einer Teilmenge der Parameterwerte desselben Parametersatzes unter Annahme konstanter Werte für die übrigen Parameter dieses Parametersatzes erfolgt. Dabei wird in der Regel von dem oben angegebenen Signalmodell ausgegangen, bei dem angenommen wird, daß das gemessene Signal y(t) als Überlagerung von einer Anzahl von Teilsignalen $y_\ell(t)$ vorliegt.

Unter Verwendung des erfindungsgemäßen Verfahrens können in einer Vielzahl von Fällen zufriedenstellende Beschreibungen der Signalausbreitung mit vergleichsweise wenigen Iterationsschritten, d.h. in kurzer Zeit erhalten werden. Allerdings hat es sich gezeigt, daß in einigen Fällen auch die erfindungsgemäß vorgeschlagene Variation des Signalmodells nicht zu zufriedenstellenden Ergebnissen führt. Zur Behebung dieses Mangels wird gemäß einem weiteren Gesichtspunkt der Erfindung vorgeschlagen, den Anfangswert der iterativen Optimierung für mindestens einen Parameter des Signalmodells unter Verwendung des empfangenen Signals zu bestimmen. Diese Weiterbildung bekannter Verfahren geht auf die Erkenntnis zurück, daß die Konvergenzgeschwindigkeit von Optimierungsverfahren i. a. von einer geschickten Wahl der Anfangswerte der Optimierung abhängt und eine besonders realitätsnahe Wahl der Anfangswerte erfolgen kann, wenn bereits bei dieser Wahl das empfangene Signal berücksichtigt wird. Die Bestimmung der Anfangswerte für die im Verlauf des erfindungsgemäßen Verfahrens ausgeführte iterative Optimierung kann weiter verbessert werden, wenn die Anfangswerte für die Parameter eines Parametersatzes nacheinander unter Verwendung des empfangenen Signals und der zuvor bereits bestimmten Anfangswerte der Parameter dieses Parametersatzes bestimmt werden. Ebenso können Anfangswerte für Parametersätze, die zu erst nach Ausführung mindestens eines Iterationsschrittes nachträglich berücksichtigten Teilsignalen gehören, unter Verwendung von zuvor bestimmten Parameterwerten der anderen Teilsignale bestimmt werden. Dabei wird vorzugsweise zunächst anhand des gemessenen Signals und der bereits bestimmten Anfangswerte der Parametersätze das Teilsignal $y_\ell(t)$ bestimmt. Dann wird in dieser Reihenfolge die Signallaufzeit $\tau_\ell$, der Einfallswinkel $\Omega_{2,\ell}$, der Abstrahlwinkel $\Omega_{1,\ell}$, die Dopplerfrequenz $v_\ell$ für das Teilsignal $y_\ell$ bestimmt und daraus ein Schätzwert für die Amplitude $\alpha_\ell$ errechnet Diese Anfangswertbestimmung kann bei Benutzung einer Anordnung mit einer Mehrzahl von Abstrahl- und Empfangselementen (MIMO-System) nach dem folgenden Algorithmus durchgeführt werden:

Für $\ell = 1,...,L$

$$y^{(\ell)}(t) = y(t) - \sum_{\ell'=1}^{\ell-1} s(t; \widehat{\theta}_{\ell'}(0)) \tag{5}$$

$$\widehat{\tau}_\ell(0) = \text{argmax}_{\tau_\ell} \left\{ \sum_{i,n,m} \left| \int_0^{T_{sc}} u(t - \tau_\ell)^* \cdot \right. \right.$$
$$\left. \left. y^{(\ell)}(t + t_{i,n,m}) dt \right|^2 \right\} \tag{6}$$

$$(\widehat{\phi_{2,\ell}}(0), \widehat{\theta_{2,\ell}}(0))$$
$$= \text{argmax}_{(\phi_{2,\ell}, \theta_{2,\ell})} \left\{ \sum_{i,m} \left| \sum_n \tilde{c}_{2,n}(\phi_{2,\ell}, \theta_{2,\ell})^* \cdot \right. \right.$$
$$\left. \left. \int_0^{T_{sc}} u(t - \widehat{\tau}_\ell(0))^* y^{(\ell)}(t + t_{i,n,m}) dt \right|^2 \right\} \tag{7}$$

$$(\widehat{\phi_{1,\ell}}(0), \widehat{\theta_{1,\ell}}(0))$$
$$= \text{argmax}_{(\phi_{1,\ell}, \theta_{1,\ell})} \left\{ \sum_i \left| \sum_m \tilde{c}_{1,m}(\phi_{1,\ell}, \theta_{1,\ell})^* \cdot \right. \right.$$
$$\left( \sum_n \tilde{c}_{2,n}(\widehat{\phi_{2,\ell}}(0), \widehat{\theta_{2,\ell}}(0))^* \cdot \right.$$
$$\left. \left. \left. \int_0^{T_{sc}} u(t - \widehat{\tau}_\ell(0))^* y^{(\ell)}(t + t_{i,n,m}) dt \right) \right|^2 \right\} \tag{8}$$

$$\widehat{\nu}_\ell(0) = \text{argmax}_{\nu_\ell} \left\{ \left| \sum_i \exp\{-j 2\pi \nu_\ell t_{i,n,m}\} \cdot \right. \right.$$
$$\left[ \sum_m \tilde{c}_{1,m}(\widehat{\phi_{1,\ell}}(0), \widehat{\theta_{1,\ell}}(0))^* \left( \sum_n \tilde{c}_{2,n}(\widehat{\phi_{2,\ell}}(0), \widehat{\theta_{2,\ell}}(0))^* \cdot \right. \right.$$
$$\left. \left. \left. \left. \int_0^{T_{sc}} u(t - \widehat{\tau}_\ell(0))^* y^{(\ell)}(t + t_{i,n,m}) dt \right) \right] \right| \right\} \tag{9}$$

$$\widehat{a_\ell}(0) = \|c_2(\widehat{\phi_{2,\ell}}(0), \widehat{\theta_{2,\ell}}(0))\| \|c_1(\widehat{\phi_{1,\ell}}(0), \widehat{\theta_{1,\ell}}(0))| I P T_{sc}]^{-1} \cdot$$

$$\left\{ \sum_i \exp\{-j2\pi\hat{\nu}_\ell(0)t_{i,n,m}\} \left[ \sum_m \tilde{c}_{1,m}(\widehat{\phi_{1,\ell}}(0), \widehat{\theta_{1,\ell}}(0))^* \cdot \right. \right.$$

$$\left( \sum_n \tilde{c}_{2,n}(\widehat{\phi_{2,\ell}}(0), \widehat{\theta_{2,\ell}}(0))^* \cdot \right.$$

$$\left. \left. \left. \int_0^{T_{sc}} u(t - \hat{\tau}_\ell(0))^* y^{(\ell)}(t + t_{i,n,m}) dt \right) \right] \right\}$$

Dabei bezeichnen die Koordinatenpaare $(\varphi_{1,\ell}, \theta_{1,\ell})$ und $(\varphi_{2,\ell}, \theta_{2,\ell})$ die Einfallsrichtung bzw. die Abstrahlrichtung des entsprechenden Teilsignals darstellende Polarkoordinaten, $t_{i,n,m}$ die Startzeit eines in einem Meßzyklus i von einem Abstrahlelement n abgestrahlten und von einem Empfangselement m empfangenen Code-Signals, $T_{sc}$ die Dauer, für die der Teilkanal mit dem Abstrahlement n und dem Empfangselement m für die Auswertung geschaltet ist und $\tilde{c}$ normierte Steeringvektoren für den Abstrahlbereich und den Empfangsbereich.

Wie der vorstehenden Erläuterung erfindungsgemäßer Verfahren zu entnehmen ist, weist eine Vorrichtung zur Ausführung dieser Verfahren mindestens eine Abstrahleinrichtung zum Abstrahlen eines Signals, mindestens eine Empfangseinrichtung zum Empfangen des abgestrahlten Signals und eine Auswertungseinrichtung zum Anpassen der Parameter eines Signalmodells an das empfangene Signal auf, wobei die Auswertungseinrichtung zum Ausführen des vorstehend erläuterten variablen iterativen Optimierungsverfahrens betreibbar ist.

**Patentansprüche**

1. Verfahren zum Bestimmen der Signalausbreitungseigenschaften eines drahtlos übertragenen Signals, insbesondere Mobilfunksignals, bei dem ein mindestens in einem Abstrahlbereich abgestrahltes Signal in mindestens einem Empfangsbereich empfangen wird und Werte von Parametern eines vorgegebenen Signalmodells zur Anpassung eines auf Grundlage des Signalmodells geschätzten Signals an das empfangene Signal in einer Folge von Iterationsschritten optimiert werden, **dadurch gekennzeichnet, daß** das Ergebnis der iterativen Optimierung nach jedem Iterationsschritt bewertet und in Abhängigkeit von dem Ergebnis der Bewertung festgelegt wird, ob

   a) die iterative Optimierung abgebrochen oder

   b1) für den nächsten Iterationsschritt mindestens ein neuer Parameter des Signalmodells berücksichtigt und/ oder

   b2) mindestens ein Parameter des Signalmodells beim nächsten Iterationsschritt ignoriert wird oder

   b3) der nächste Iterationsschritt ohne Änderung der berücksichtigten Parameter durchgeführt wird.

2. Verfahren nach Anspruch 1, **dadurch gekennzeichnet, daß** mindestens ein in einem Iterationsschritt ignorierter Parameter in einem späten Iterationsschritt wieder berücksichtigt wird.

3. Verfahren nach Anspruch 1 oder 2, **dadurch gekennzeichnet, daß** die Werte der Parameter in jedem Iterationsschritt zur Anpassung des geschätzten Signals an das gemessene Signal schrittweise variiert werden.

4. Verfahren nach Anspruch 3, **dadurch gekennzeichnet, daß** mindestens ein Parameterwert in mindestens einem Iterationsschritt nur in einem vorgegebenen Teilbereich eines möglichen Wertebereichs für diesen Parameter variiert wird.

5. Verfahren nach Anspruch 3 oder 4, **dadurch gekennzeichnet, daß** für mindestens einen Parameterwert des Signalmodells die Schrittweite bei der Variation innerhalb mindestens eines Iterationsschrittes und/oder zwischen aufeinanderfolgenden Iterationsschritten variiert wird.

**6.** Verfahren nach einem der vorhergehenden Ansprüche, **dadurch gekennzeichnet, daß** das gemessene Signal nach dem vorgegebenen Signalmodell aus einer Mehrzahl von jeweils durch einen entsprechenden Parametersatz definierten Teilsignalen gebildet ist und die Optimierung der Anpassung in einer Folge von Teiliterationsschritten ausgeführt wird, in denen jeweils eine Optimierung der Anpassung der Werte für einen Parametersatz unter der Annahme konstanter Werte für die Parameter der übrigen Parametersätze erfolgt.

**7.** Verfahren nach Anspruch 6, **dadurch gekennzeichnet, daß** in einem Teiliterationsschritt ermittelte Parameterwerte eines Parametersatzes bei einem folgenden Teiliterationsschritt desselben Iterationsschrittes als konstante Werte für diesen Parametersatz angenommen werden und/oder mindestens ein in einem vorhergehenden Iterationsschritt ermittelter Parameterwert bei mindestens einem Teiliterationsschritt als konstanter Wert angenommen wird.

**8.** Verfahren nach Anspruch 7, **dadurch gekennzeichnet, daß** die Reihenfolge der Ausführung der Teiliterationsschritte eines Iterationsschrittes in Abhängigkeit von den in einem vorhergehenden Iterationsschritt optimierten Parameterwerten der Parametersätze bestimmt wird.

**9.** Verfahren nach Anspruch 8, **dadurch gekennzeichnet, daß** die Teiliterationsschritte in einem Iterationsschritt in einer der in einem vorhergehenden Iterationsschritt optimierten Amplituden der Teilsignale entsprechenden Reihenfolge beginnend mit dem die höchste/kleinste Amplitude aufweisenden Teilsignal ausgeführt werden.

**10.** Verfahren nach den Ansprüchen 6 bis 9, **dadurch gekennzeichnet, daß** bei der Bewertung in einem Iterationsschritt optimierte Werte der Parameter mindestens eines Parametersatzes mit den in einem vorhergehenden Iterationsschritt optimierten Werten für die Parameter desselben Satzes verglichen werden und bei einer oberhalb eines vorgegebenen Grenzwertes liegenden Änderung eines Parameterwertes in einem folgenden Iterationsschritt ein neuer Parametersatz des Signalmodells berücksichtigt wird.

**11.** Verfahren nach den Ansprüchen 6 bis 10, **dadurch gekennzeichnet, daß** in mindestens einem Teiliterationsschritt die Optimierung der Anpassung in einer Folge von Unteriterationsschritten ausgeführt wird, in denen jeweils eine Optimierung der Anpassung einer Teilmenge der Parameterwerte desselben Parametersatzes unter Annahme konstanter Werte für die übrigen Parameter dieses Parametersatzes erfolgt, insbesondere nach dem SAGE-Algorithmus.

**12.** Verfahren nach Anspruch 11, **dadurch gekennzeichnet, daß** jeder Parameter eines Parametersatzes einer physikalisch meßbaren Größe des entsprechenden Teilsignals, wie etwa einer Verzögerungszeit, einer Dopplerfrequenz oder einer Einfallsrichtung zugeordnet ist, und die Unteriterationsschritte in der Reihenfolge der natürlichen Auflösungen der entsprechenden physikalischen Größe, beginnend mit dem der physikalischen Größe höchster natürlicher Auflösung entsprechenden Parameter ausgeführt werden.

**13.** Verfahren nach einem der vorhergehenden Ansprüche, **dadurch gekennzeichnet, daß** das gemessene Signal y (t) nach dem folgenden Signalmodell ggf. unter zusätzlicher Berücksichtigung weiterer Signaleigenschaften beschrieben wird:

$$y(t) = \sum_{\ell=1}^{\infty} y_\ell(t) = \sum_{\ell=1}^{\infty} s(t; \theta_\ell) + W_\ell(t)$$

$$= \sum_{\ell=1}^{\infty} \alpha_\ell \exp\{2\pi i v_\ell \cdot t\} c_2 (\Omega_{2,\ell}) c_1 (\Omega_{1,\ell}) \cdot u (t - \tau_\ell) + W_\ell(t)$$

wobei gilt:

$\alpha_\ell =$       komplexe Amplitude des Teilsignals $\ell$

$v_\ell =$       Dopplerverschiebung des Teilsignals $\ell$

$\Omega_{2,\ell}$ =     Einfallsrichtung des Teilsignals $\ell$ in den Empfangsbereich

$\Omega_{1,\ell}$ =     Abstrahlrichtung des Teilsignals $\ell$ vom Abstrahlbereich

$\tau_\ell$ =     Signallaufzeit des Teilsignals $\ell$ vom Abstrahlbereich zum Empfangsbereich

$c_2$ =     Empfangscharakteristik des Empfangsbereichs

$c_1$ =     Abstrahlcharakteristik des Abstrahlbereichs

$\theta_\ell$ =     $[\Omega_{1,\ell}, \Omega_{2,\ell}, \tau_\ell, \nu_\ell, \alpha_\ell]$

$W_\ell$ =     räumlich und zeitlich weißes Rauschen

u =     abgestrahltes Testsignal

**14.** Verfahren zum Bestimmen der Signalausbreitungseigenschaften eines drahtlos übertragbaren Signals, nach einem der vorhergehenden Ansprüche, bei dem ein in einem Abstrahlbereich abgestrahltes Signal in einem Empfangsbereich empfangen wird und
Parameter eines vorgegebenen Signalmodells zur Anpassung eines auf Grundlage des Signalmodells geschätzten Signals an das empfangene Signal iterativ optimiert werden,
**dadurch gekennzeichnet, daß** der Anfangswert der iterativen Optimierung für mindestens einen Parameter des Signalmodells unter Verwendung des empfangenen Signals bestimmt wird.

**15.** Verfahren nach Anspruch 14, **dadurch gekennzeichnet, daß** die Anfangswerte für die einzelnen Parametersätze des Signalmodells nacheinander bestimmt werden, wobei bei der Bestimmung der Anfangswerte für mindestens einen Parametersatz das empfangene Signal und bereits zuvor bestimmte Anfangswerte mindestens eines anderen Parametersatzes berücksichtigt werden.

**16.** Verfahren nach Anspruch 14 oder 15, bei dem die Anfangswerte für die Parameter eines Parametersatzes nacheinander unter Verwendung des empfangenen Signals und der zuvor bereits bestimmten Anfangswerte der Parameter dieses Parametersatzes bestimmt werden.

**17.** Verfahren nach den Ansprüchen 14 bis 15, **dadurch gekennzeichnet, daß** die Anfangswerte $(\hat{\tau}_\ell(0); \hat{\Omega}_{2,\ell}(0); \Omega_{1,\ell}$ (0); $\nu_\ell(0); \alpha_\ell(0))$ für die Parametersätze $(\tau_\ell, \Omega_{2,\ell}, \Omega_{1,\ell}, \nu_\ell, \alpha_\ell)$ der einzelnen Teilsignale $y_\ell(t)$ wie folgt bestimmt werden:
Für $\ell = 1, ..., L$

$$y^{(\ell)}(t) = y(t) - \sum_{\ell'=1}^{\ell-1} s(t; \widehat{\theta_{\ell'}}(0)) \qquad (5)$$

$$\widehat{\tau}_\ell(0) = \text{argmax}_{\tau_\ell} \left\{ \sum_{i,n,m} \left| \int_0^{T_{pc}} u(t - \tau_\ell)^* \cdot \right. \right.$$

$$\left. \left. y^{(\ell)}(t + t_{i,n,m}) dt \right|^2 \right\} \qquad (6)$$

$$\widehat{(\phi_{2,\ell}(0), \theta_{2,\ell}(0))}$$

$$= \mathrm{argmax}_{(\phi_{2,\ell},\theta_{2,\ell})} \left\{ \sum_{i,m} \left| \sum_{n} \bar{c}_{2,n}(\phi_{2,\ell}, \theta_{2,\ell})^* \cdot \right. \right.$$

$$\left. \left. \int_0^{T_{sc}} u(t - \widehat{\tau}_\ell(0))^* y^{(\ell)}(t + t_{i,n,m}) dt \right|^2 \right\} \qquad (7)$$

$$\widehat{(\phi_{1,\ell}(0), \theta_{1,\ell}(0))}$$

$$= \mathrm{argmax}_{(\phi_{1,\ell},\theta_{1,\ell})} \left\{ \sum_{i} \left| \sum_{m} \bar{c}_{1,m}(\phi_{1,\ell}, \theta_{1,\ell})^* \cdot \right. \right.$$

$$\left( \sum_{n} \bar{c}_{2,n}(\widehat{\phi_{2,\ell}(0), \theta_{2,\ell}(0)})^* \cdot \right.$$

$$\left. \left. \left. \int_0^{T_{sc}} u(t - \widehat{\tau}_\ell(0))^* y^{(\ell)}(t + t_{i,n,m}) dt \right) \right|^2 \right\} \qquad (8)$$

$$\widehat{\nu}_\ell(0) = \mathrm{argmax}_{\nu_\ell} \left\{ \left\| \sum_{i} \exp\{-\jmath 2\pi \nu_\ell t_{i,n,m}\} \cdot \right. \right.$$

$$\left[ \sum_{m} \bar{c}_{1,m}(\widehat{\phi_{1,\ell}(0), \theta_{1,\ell}(0)})^* \left( \sum_{n} \bar{c}_{2,n}(\widehat{\phi_{2,\ell}(0), \theta_{2,\ell}(0)})^* \cdot \right. \right.$$

$$\left. \left. \left. \int_0^{T_{sc}} u(t - \widehat{\tau}_\ell(0))^* y^{(\ell)}(t + t_{i,n,m}) dt \right) \right] \right\| \right\} \qquad (9)$$

$$\widehat{\alpha_\ell}(0) = [\|c_2(\widehat{\phi_{2,\ell}(0), \theta_{2,\ell}(0)})\| \|c_1(\widehat{\phi_{1,\ell}(0), \theta_{1,\ell}(0)})\| I P T_{sc}]^{-1} \cdot$$

$$\left\{ \sum_{i} \exp\{-\jmath 2\pi \widehat{\nu}_\ell(0) t_{i,n,m}\} \left[ \sum_{m} \bar{c}_{1,m}(\widehat{\phi_{1,\ell}(0), \theta_{1,\ell}(0)})^* \cdot \right. \right.$$

$$\left( \sum_{n} \bar{c}_{2,n}(\widehat{\phi_{2,\ell}(0), \theta_{2,\ell}(0)})^* \cdot \right.$$

$$\left. \left. \left. \int_0^{T_{sc}} u(t - \widehat{\tau}_\ell(0))^* y^{(\ell)}(t + t_{i,n,m}) dt \right) \right] \right\}$$

**18.** Digitales Speichermedium, insbesondere Diskette oder CD-ROM, mit elektronisch auslesbaren Steuersignalen, die so mit einem programmierbaren Computersystem einer Abstrahleinrichtung und einer Empfangseinrichtung zusammenwirken können, daß ein Verfahren nach einem der Ansprüche 1 bis 17 ausgeführt wird.

**EP 1 361 715 B1**

**Claims**

1. Method for determining the signal propagation properties of a wirelessly transmitted signal, in particular mobile radio signal, in which a signal emitted in at least one emitting region is received in at least one receiving region and values of parameters of a preset signal model are optimised in a series of iteration steps to match a signal estimated on the basis of the signal model to the received signal,
**characterised in that** the result of the iterative optimisation is assessed after each iteration step and in dependence on the result of the assessment it is determined whether

   a) the iterative optimisation is terminated or

   b1) at least one new parameter of the signal model is taken into account for the next iteration step and/or

   b2) at least one parameter of the signal model is ignored in the next iteration step or

   b3) the next iteration step is carried out without changing the parameters taken into account.

2. Method according to Claim 1, **characterised in that** at least one parameter ignored in one iteration step is taken into account again in a subsequent iteration step.

3. Method according to Claim 1 or 2, **characterised in that** the values of the parameters are varied stepwise in each iteration step to match the estimated signal to the measured signal.

4. Method according to Claim 3, **characterised in that** at least one parameter value is varied in at least one iteration step, only in a preset subrange of a possible range of values for this parameter.

5. Method according to Claim 3 or 4, **characterised in that** the step size for at least one parameter value of the signal model in the variation within at least one iteration step and/or between successive iteration steps is varied.

6. Method according to one of the preceding claims, **characterised in that** the measured signal is formed, using the preset signal model, from a plurality of partial signals, each defined by a corresponding set of parameters, and the optimisation of the matching is carried out in a series of partial iteration steps, in each of which an optimisation of the matching of the values for one set of parameters takes place, assuming constant values for the parameters of the remaining sets of parameters.

7. Method according to Claim 6, **characterised in that** parameter values, determined in a partial iteration step, of one set of parameters are assumed to be constant values for this set of parameters in a following partial iteration step of the same iteration step, and/or at least one parameter value determined in a preceding iteration step is assumed to be a constant value in at least one partial iteration step.

8. Method according to Claim 7, **characterised in that** the order in which the partial iteration steps of one iteration step are carried out is determined in dependence on the parameter values, optimised in a preceding iteration step, of the sets of parameters.

9. Method according to Claim 8, **characterised in that** the partial iteration steps in one iteration step are carried out in an order corresponding to the amplitudes of the partial signals optimised in a preceding iteration step, starting with the partial signal having the highest/lowest amplitude.

10. Method according to Claims 6 to 9, **characterised in that** values, optimised in the assessment in one iteration step, of the parameters of at least one set of parameters are compared with the values, optimised in a preceding iteration step, for the parameters of the same set and in the event of a change, lying above a preset limit value, of a parameter value a new set of parameters of the signal model is taken into account in a following iteration step.

11. Method according to Claims 6 to 10, **characterised in that** in at least one partial iteration step the optimisation of the matching is carried out in a series of subiteration steps, in each of which an optimisation of the matching of a subset of the parameter values of the same set of parameters takes place, assuming constant values for the remaining parameters of this set of parameters, in particular using the SAGE algorithm.

**12.** Method according to Claim 11, **characterised in that** each parameter of one set of parameters is assigned to a physically measurable quantity of the corresponding partial signal, such as a delay time, a Doppler frequency or a direction of incidence, and the subiteration steps are carried out in the order of the natural resolutions of the corresponding physical quantity, starting with the parameter corresponding to the physical quantity of highest natural resolution.

**13.** Method according to one of the preceding claims, **characterised in that** the measured signal y(t) is described using the following signal model, optionally taking into account further signal properties in addition:

$$y(t) = \sum_{\ell=1}^{\infty} y_\ell(t) = \sum_{\ell=1}^{\infty} s(t; \theta_\ell) + W_\ell(t)$$

$$= \sum_{\ell=1}^{\infty} \alpha_\ell \exp\{2\pi i \nu_\ell \cdot t\} c_2(\Omega_{2,\ell}) c_1(\Omega_{1,\ell}) \cdot u(t - \tau_\ell) + W_\ell(t)$$

where:

$\alpha_\ell =$      complex amplitude of the partial signal $\ell$

$\nu_\ell =$      Doppler shift of the partial signal $\ell$

$\Omega_{2,\ell} =$      direction of incidence of the partial signal $\ell$ in the receiving region

$\Omega_{1,\ell} =$      direction of emission of the partial signal $\ell$ from the emitting region

$\tau_\ell =$      signal propagation time of the partial signal $\ell$ from the emitting region to the receiving region

$c_2 =$      receiving characteristic of the receiving region

$c_1 =$      emitting characteristic of the emitting region

$\theta_\ell =$      $[\Omega_{1,\ell}, \Omega_{2,\ell}, \tau_\ell, \nu_\ell, \alpha_\ell]$

$W_\ell =$      spatial and temporal white noise

$u =$      emitted test signal

**14.** Method for determining the signal propagation properties of a wirelessly transmittable signal, according to one of the preceding claims, in which a signal emitted in an emitting region is received in a receiving region and parameters of a preset signal model are optimised iteratively to match a signal estimated on the basis of the signal model to the received signal,
**characterised in that** the initial value of the iterative optimisation for at least one parameter of the signal model is determined using the received signal.

**15.** Method according to Claim 14, **characterised in that** the initial values for the individual sets of parameters of the signal model are determined successively, taking into account in the determination of the initial values for at least one set of parameters the received signal and already previously determined initial values of at least one other set of parameters.

**16.** Method according to Claim 14 or 15, in which the initial values for the parameters of one set of parameters are determined successively using the received signal and the already previously determined initial values of the parameters of this set of parameters.

**17.** Method according to Claims 14 to 15, **characterised in that** the initial values $(\hat{\tau}_\ell(0); \hat{\Omega}_{2,\ell}(0); \Omega_{1,\ell}(0); \nu_\ell(0); \alpha_\ell(0))$ for the sets of parameters $(\tau_\ell, \Omega_{2,\ell}, \Omega_{1,\ell}, \nu_\ell, \alpha_\ell)$ of the individual partial signals $y_\ell(t)$ are determined as follows: For $\ell = 1,..., L$

$$y^{(\ell)}(t) = y(t) - \sum_{\ell'=1}^{\ell-1} s(t; \widehat{\theta_{\ell'}}(1)) \tag{5}$$

$$\hat{\tau}_\ell(0) = \text{argmax}_{\tau_\ell} \left\{ \sum_{i,n,m} \left| \int_0^{T_{vc}} u(t-\tau_\ell)^* \cdot \right. \right.$$
$$\left. \left. y^{(\ell)}(t+t_{i,n,m}) dt \right|^2 \right\} \tag{6}$$

$$(\widehat{\phi_{2,\ell}}(0); \widehat{\theta_{2,\ell}}(0))$$

$$= \text{argmax}_{(\phi_{2,\ell},\theta_{2,\ell})} \left\{ \sum_{i,m} \left| \sum_n \bar{c}_{2,n}(\phi_{2,\ell},\theta_{2,\ell})^* \cdot \right. \right.$$
$$\left. \left. \int_0^{T_{vc}} u(t-\hat{\tau}_\ell(0))^* y^{(\ell)}(t+t_{i,n,m}) dt \right|^2 \right\} \tag{7}$$

$$(\widehat{\phi_{1,\ell}}(0), \widehat{\theta_{1,\ell}}(0))$$

$$= \text{argmax}_{(\phi_{1,\ell},\theta_{1,\ell})} \left\{ \sum_i \left| \sum_m \bar{c}_{1,m}(\phi_{1,\ell},\theta_{1,\ell})^* \cdot \right. \right.$$
$$\left( \sum_n \bar{c}_{2,n}(\widehat{\phi_{2,\ell}}(0), \widehat{\theta_{2,\ell}}(0))^* \cdot \right.$$
$$\left. \left. \left. \int_0^{T_{vc}} u(t-\hat{\tau}_\ell(0))^* y^{(\ell)}(t+t_{i,n,m}) dt \right) \right|^2 \right\} \tag{8}$$

$$\hat{\nu}_\ell(0) = \text{argmax}_{\nu_\ell} \left\{ \left| \sum_i \exp\{-j2\pi\nu_\ell t_{i,n,m}\} \cdot \right. \right.$$
$$\left[ \sum_m \bar{c}_{1,m}(\widehat{\phi_{1,\ell}}(0), \widehat{\theta_{1,\ell}}(0))^* \left( \sum_n \bar{c}_{2,n}(\widehat{\phi_{2,\ell}}(0), \widehat{\theta_{2,\ell}}(0))^* \cdot \right. \right.$$
$$\left. \left. \left. \left. \int_0^{T_{vc}} u(t-\hat{\tau}_\ell(0))^* y^{(\ell)}(t+t_{i,n,m}) dt \right) \right] \right| \right\} \tag{9}$$

$$\widehat{\alpha_\ell}(0) = \|c_2(\widehat{\phi_{2,\ell}}(0), \widehat{\theta_{2,\ell}}(0))\| c_1(\widehat{\phi_{1,\ell}}(0), \widehat{\theta_{1,\ell}}(0)) | \dot{I} P T_{sc}]^{-1} \cdot$$

$$\left\{ \sum_i \exp\{-j 2\pi \widehat{\nu_\ell}(0) t_{i,n,m}\} \left[ \sum_m \bar{c}_{1,m}(\widehat{\phi_{1,\ell}}(0), \widehat{\theta_{1,\ell}}(0))^* \cdot \right. \right.$$

$$\left( \sum_n \bar{c}_{2,n}(\widehat{\phi_{2,\ell}}(0), \widehat{\theta_{2,\ell}}(0))^* \cdot \right.$$

$$\left. \left. \left. \int_0^{T_{sc}} u(t - \widehat{\tau_\ell}(0))^* y^{(\ell)}(t + t_{i,n,m}) dt \right) \right] \right\}$$

**18.** Digital storage medium, in particular floppy disk or CD-ROM, having control signals which can be read out electronically and can interact with a programmable computer system of an emitting device and a receiving device in such a way that a method according to one of Claims 1 to 17 can be carried out.

## Revendications

**1.** Procédé pour déterminer les propriétés de propagation d'un signal transmis sans fil, notamment d'un signal de radio mobile, dans lequel au moins un signal diffusé dans une zone de diffusion est reçu dans au moins une zone de réception, et des valeurs de paramètre d'un modèle de signal prédéterminé sont optimisées dans une succession d'étapes d'itération pour adapter un signal estimé sur la base du modèle de signal au signal reçu, **caractérisé en ce qu'**après chaque étape d'itération, on évalue le résultat de l'optimisation itérative et on détermine en fonction du résultat de l'évaluation si

a) on interrompt l'optimisation itérative, ou
b1) on tient compte pour l'étape d'itération suivante au moins d'un nouveau paramètre du modèle de signal, et/ou
b2) on ignore au moins un paramètre du modèle de signal lors de l'étape d'itération suivante, ou
b3) on exécute l'étape d'itération suivante sans modifier les paramètres pris en compte.

**2.** Procédé selon la revendication 1, **caractérisé en ce qu'**au moins un paramètre ignoré dans une étape d'itération est à nouveau pris en compte dans une étape d'itération ultérieure.

**3.** Procédé selon la revendication 1 ou 2, **caractérisé en ce que** l'on fait varier les valeurs des paramètres dans chaque étape d'itération pour adapter le signal estimé au signal mesuré.

**4.** Procédé selon la revendication 3, **caractérisé en ce que** l'on fait varier au moins une valeur de paramètre dans au moins une étape d'itération uniquement dans une plage partielle prédéterminée d'une plage de valeurs possible pour ce paramètre.

**5.** Procédé selon la revendication 3 ou 4, **caractérisé en ce que** l'on fait varier pour au moins une valeur de paramètre du modèle de signal l'amplitude de pas lors de la variation dans au moins une étape d'itération et/ou entre des étapes d'itération successives.

**6.** Procédé selon l'une quelconque des revendications précédentes, **caractérisé en ce que** le signal mesuré selon le modèle de signal prédéterminé est formé par une pluralité de signaux partiels respectivement définis par un jeu de paramètres adéquat, et **en ce que** l'optimisation de l'adaptation est réalisée dans une succession d'étapes d'itération partielles, dans lesquelles est effectuée à chaque fois une optimisation de l'adaptation des valeurs pour un jeu de paramètres en prenant des valeurs constantes pour les paramètres des autres jeux de paramètres.

**7.** Procédé selon la revendication 6, **caractérisé en ce que** des valeurs de paramètre d'un jeu de paramètres déterminées dans une étape d'itération partielle sont prises, dans une étape d'itération partielle suivante de la même étape d'itération, comme valeurs constantes pour ce jeu de paramètres, et/ou **en ce qu'**au moins une valeur de paramètre déterminée dans une étape d'itération précédente est prise comme valeur constante dans au moins une étape d'itération partielle.

8. Procédé selon la revendication 7, **caractérisé en ce que** l'ordre d'exécution des étapes d'itération partielles d'une étape d'itération est déterminé en fonction des valeurs de paramètre des jeux de paramètres optimisées dans une étape d'itération précédente.

9. Procédé selon la revendication 8, **caractérisé en ce que** les étapes d'itération partielle sont exécutées dans une étape d'itération dans un ordre correspondant à l'une des amplitudes optimisées des signaux partiels dans une étape d'itération précédente, à commencer par le signal partiel présentant la plus grande/plus petite amplitude.

10. Procédé selon les revendications 6 à 9, **caractérisé en ce que** des valeurs de paramètre d'au moins un jeu de paramètres optimisées lors de l'évaluation dans une étape d'itération sont comparées avec les valeurs de paramètre du même jeu optimisées dans une étape d'itération précédente et, en présence d'une variation d'une valeur de paramètre supérieure à une valeur limite prédéterminée, un nouveau jeu de paramètres du modèle de signal est pris en compte dans une étape d'itération suivante.

11. Procédé selon les revendications 6 à 10, **caractérisé en ce que** dans au moins une étape d'itération partielle, l'optimisation de l'adaptation est exécutée dans une suite de sous-étapes d'itération, dans lesquelles est effectuée à chaque fois une optimisation de l'adaptation d'une quantité partielle des valeurs de paramètre du même jeu de paramètres en prenant des valeurs constantes pour les autres paramètres de ce jeu de paramètres, notamment selon l'algorithme SAGE.

12. Procédé selon la revendication 11, **caractérisé en ce que** chaque paramètre d'un jeu de paramètres est associé à une grandeur physique mesurable du signal partiel correspondant, telle que par exemple un temps de retard, une fréquence Doppler ou une direction d'incidence, et **en ce que** les sous-étapes d'itération sont exécutées dans l'ordre des résolutions naturelles de la grandeur physique correspondante, à commencer par le paramètre correspondant à la grandeur physique présentant la plus haute résolution naturelle.

13. Procédé selon l'une quelconque des revendications précédentes, **caractérisé en ce que** le signal mesuré $y(t)$ est décrit selon le modèle de signal suivant, le cas échéant en tenant compte d'autres propriétés de signal :

$$y(t) = \sum_{\ell=1}^{\infty} y_\ell(t) = \sum_{\ell=1}^{\infty} s(t; \theta_\ell) + W_\ell(t)$$

$$= \sum_{\ell=1}^{\infty} \alpha_\ell \exp\{2\pi i v_\ell \cdot t\} c_2(\Omega_{2,\ell}) c_1(\Omega_{1,\ell}) \cdot u(t - \tau_\ell) + W_\ell(t)$$

où signifient :

$\alpha_t$ = amplitude complexe du signal partiel $\ell$
$\gamma_\ell$ = déplacement Doppler du signal partiel $\ell$.
$\Omega_{2,\ell}$ = direction d'incidence du signal partiel $\ell$ dans la zone de réception
$\Omega_{1,\ell}$ = direction de diffusion du signal partiel $\ell$ de la zone de diffusion
$\tau_\ell$ = durée de signal du signal partiel $\ell$ de la zone de diffusion à la zone de réception
$C_2$ = caractéristique de réception de la zone de réception
$C_1$ = caractéristique de diffusion de la zone de diffusion
$\theta_t = [\Omega_{1,\ell}, \Omega_{2,\ell}, \tau_\ell, \gamma_\ell, \alpha_\ell]$
$W_\ell$ = bruit blanc spatial et temporel
$u$ = signal de test diffusé

14. Procédé pour déterminer les propriétés de propagation d'un signal transmis sans fil selon l'une quelconque des revendications précédentes, dans lequel un signal diffusé dans une zone de diffusion est reçu dans une zone de réception, et des paramètres d'un modèle de signal prédéterminé sont optimisés par itération pour adapter un signal estimé sur la base du modèle de signal au signal reçu, **caractérisé en ce que** la valeur de départ de l'optimisation itérative pour au moins un paramètre du modèle de signal est déterminée en utilisant le signal reçu.

15. Procédé selon la revendication 14, **caractérisé en ce que** les valeurs de départ des différents jeux de paramètres du modèle de signal sont déterminées les unes après les autres, en tenant compte, pour déterminer les valeurs de départ d'au moins un jeu de paramètres, du signal reçu ainsi que de valeurs de départ d'au moins un autre jeu de paramètres déjà déterminées préalablement.

16. Procédé selon la revendication 14 ou 15, dans lequel les valeurs de départ des paramètres d'un jeu de paramètres sont déterminées les unes après les autres en utilisant le signal reçu et les valeurs de départ des paramètres de ce jeu de paramètres déjà déterminées préalablement.

17. Procédé selon les revendications 14 à 15, **caractérisé en ce que** les valeurs de départ $(\tau_\ell(0) ; \Omega_{2,\ell}(0) ; \Omega_{1,\ell}(0) ; \gamma_\ell(0) ; \alpha_\ell(0))$ des jeux de paramètres $(\tau_\ell, \Omega_{2,\ell}, \Omega_{1,\ell}, \gamma_\ell, \alpha_\ell)$ des différents signaux partiels $Y_\ell(t)$ sont déterminées comme suit :

Si $\ell = 1,...,L$

$$y^{(\ell)}(t) = y(t) - \sum_{\ell'=1}^{\ell-1} s(t; \widehat{\theta_{\ell'}}(0)) \tag{5}$$

$$\widehat{\tau_\ell}(0) = \operatorname{argmax}_{\tau_\ell} \left\{ \sum_{i,n,m} \left| \int_0^{T_{or}} u(t - \tau_\ell)^* \cdot y^{(\ell)}(t + t_{i,n,m}) dt \right|^2 \right\} \tag{6}$$

$$(\widehat{\phi_{2,\ell}}(0), \widehat{\theta_{2,\ell}}(0))$$
$$= \operatorname{argmax}_{(\phi_{2,\ell}, \theta_{2,\ell})} \left\{ \sum_{i,m} \left| \sum_n \tilde{c}_{2,n}(\phi_{2,\ell}, \theta_{2,\ell})^* \cdot \int_0^{T_{or}} u(t - \widehat{\tau_\ell}(0))^* y^{(\ell)}(t + t_{i,n,m}) dt \right|^2 \right\} \tag{7}$$

$$(\widehat{\phi_{1,\ell}}(0), \widehat{\theta_{1,\ell}}(0))$$
$$= \operatorname{argmax}_{(\phi_{1,\ell}, \theta_{1,\ell})} \left\{ \sum_i \left| \sum_m \tilde{c}_{1,m}(\phi_{1,\ell}, \theta_{1,\ell})^* \cdot \left( \sum_n \tilde{c}_{2,n}(\widehat{\phi_{2,\ell}}(0), \widehat{\theta_{2,\ell}}(0))^* \cdot \int_0^{T_{or}} u(t - \widehat{\tau_\ell}(0))^* y^{(\ell)}(t + t_{i,n,m}) dt \right) \right|^2 \right\} \tag{8}$$

$$\widehat{\nu}_{\ell}(0) = \text{argmax}_{\nu_{\ell}} \left\{ \left| \left| \sum_{i} \exp\{-j2\pi\nu_{\ell}t_{i,n,m}\} \cdot \right. \right. \right.$$

$$\left[ \sum_{m} \bar{c}_{1,m}(\widehat{\phi_{1,\ell}}(0), \widehat{\theta_{1,\ell}}(0))^{*} \left( \sum_{n} \bar{c}_{2,n}(\widehat{\phi_{2,\ell}}(0), \widehat{\theta_{2,\ell}}(0))^{*} \cdot \right. \right.$$

$$\left. \left. \left. \left. \int_{0}^{T_{os}} u(t - \widehat{\tau}_{\ell}(0))^{*}y^{(\ell)}(t + t_{i,n,m})dt \right) \right] \right| \right| \right\} \qquad (9)$$

$$\widehat{\alpha_{\ell}}(0) = [||c_{2}(\widehat{\phi_{2,\ell}}(0), \widehat{\theta_{2,\ell}}(0))|| \, ||c_{1}(\widehat{\phi_{1,\ell}}(0), \widehat{\theta_{1,\ell}}(0))|| \, IPT_{oc}]^{-1} \cdot$$

$$\left\{ \sum_{i} \exp\{-j2\pi\widehat{\nu}_{\ell}(0)t_{i,n,m}\} \left[ \sum_{m} \bar{c}_{1,m}(\widehat{\phi_{1,\ell}}(0), \widehat{\theta_{1,\ell}}(0))^{*} \cdot \right. \right.$$

$$\left( \sum_{n} \bar{c}_{2,n}(\widehat{\phi_{2,\ell}}(0), \widehat{\theta_{2,\ell}}(0))^{*} \cdot \right.$$

$$\left. \left. \left. \int_{0}^{T_{os}} u(t - \widehat{\tau}_{\ell}(0))^{*}y^{(\ell)}(t + t_{i,n,m})dt \right) \right] \right\}$$

18. Moyen de mémoire numérique, notamment disquette ou CD-ROM, avec des signaux de commande lisibles électroniquement pouvant coopérer avec un système informatique programmable d'un dispositif de diffusion et d'un dispositif de réception, de manière à permettre l'exécution d'un procédé selon l'une des revendications 1 à 17.